# EUROPÄISCHE PATENTSCHRIFT

(11) **EP 2 150 939 B1**
(45) Veröffentlichungstag und Bekanntmachung des Hinweises auf die Patenterteilung: **16.11.2011**
(21) Anmeldenummer: 08750211.8
(22) Anmeldetag: 08.05.2008
(51) Int. Cl.: G06T 7/00, G06K 9/00

(54) **VERFAHREN UND VORRICHTUNG ZUM BESTIMMEN DER POSITION EINES VERKEHRSZEICHENS**
METHOD AND DEVICE FOR DETERMINING THE POSITION OF A ROAD SIGN
PROCÉDÉ ET DISPOSITIF POUR DÉTERMINER LA POSITION D'UN PANNEAU DE SIGNALISATION

(30) Priorität: 08.05.2007 DE 102007021576
(43) Veröffentlichungstag der Anmeldung: 10.02.2010
(73) Patentinhaber: Hella KGaA Hueck & Co., 59557 Lippstadt (DE)
(72) Erfinder: BECKER, Lars-Peter, 13156 Berlin (DE); HOFFMANN, Ingo, 10437 Berlin (DE)
(74) Vertreter: Schaumburg, Thoenes, Thurn, Landskron, Eckert
(86) Internationale Anmeldenummer: PCT/EP2008/055718
(87) Internationale Veröffentlichungsnummer: WO 2008/135604

(56) Entgegenhaltungen:
- US-A1- 2005 216 274
- US-A1- 2006 139 619
- BURSCHKA D ET AL: "Vision-Based 3D Scene Analysis for Driver Assistance" ROBOTICS AND AUTOMATION, 2005. PROCEEDINGS OF THE 2005 IEEE INTERNATIO NAL CONFERENCE ON BARCELONA, SPAIN 18-22 APRIL 2005, PISCATAWAY, NJ, USA,IEEE, 18. April 2005 (2005-04-18), Seiten 812-818, XP010872241 ISBN: 978-0-7803-8914-4

## Beschreibung

Die Erfindung betrifft ein Verfahren und eine Vorrichtung zum Bestimmen der Position eines Verkehrszeichens, bei denen die mit Hilfe einer Bilderfassungseinheit eines Kraftfahrzeugs aufgenommenen Bilder zum Bestimmen der Position des Verkehrszeichens verarbeitet und ausgewertet werden.

Zur Positionsschätzung der Position von Objekten mit Hilfe monokularer Kamerabilder können verschiedene Lösungsansätze verfolgt werden. Beispielsweise kann der optische Fluss eines Objekts und somit eines Verkehrszeichens mit Hilfe mehrerer nacheinander als Bildfolge aufgenommener Bilder ermittelt werden. Jedoch ist ein Verfahren zum Bestimmen des optischen Flusses von Verkehrszeichen ausgehend von den Kamerabildern einer in einem Fahrzeug angeordneten Kamera zur Positonsbestimmung nicht gut geeignet, da Verkehrszeichen in den aufgenommenen Bildern oft als relativ kleinflächige Objekte dargestellt sind. Für eine sichere Bestimmung des optischen Flusses ist jedoch einer Mindestredundanz im Flussfeld von Bildbestandteilen des Objekts erforderlich, um den optischen Fluss korrekt ermitteln zu können. Bei relativ kleinflächigen Objektdarstellungen können oft nur geringe oder keine Redundanzen ermittelt werden.

Ferner sind Lösungsansätze bekannt, die ein Tringulationsverfahren zur Positionsbestimmung nutzen. Bei diesen Tringulationsverfahren wird insbesondere unter Vernachlässigung der Höhe des Verkehrszeichens und unter Annahme einer ebenen Fahrbahn die Entfernung auf Straßenebene geschätzt. Jedoch sind auch solche Tringulationsverfahren zum Bestimmen der Position von Verkehrszeichen in der Praxis nicht besonders gut geeignet, da insbesondere Schilderstangen der Verkehrsschilder in den Kamerabildern nur schlecht oder gar nicht sichtbar sind und in den Kamerabildern der Fußpunkt des Verkehrszeichens oft, insbesondere durch Pflanzenbewuchs, Leitplanken etc., verdeckt ist, wodurch die tatsächliche Position des Verkehrszeichens nur relativ ungenau geschätzt werden kann.

Aus dem Dokument DE 10 2006 001 033 A1 sind eine Vorrichtung und ein Verfahren zur Erkennung eines Objekts für ein Kraftfahrzeug bekannt, mit denen eine Objektidentitätszuordnung von Objekten möglich ist. Die Objekte werden dazu mittels eines Objektdetektionsverfahrens in den erfassten Bildern der Fahrzeugumgebung selektiert. Bei diesem Objektselektionsverfahren wird für jedes selektierte Objekt eines Bildes in mehreren nacheinander aufgenommenen Bildern jeweils eine Bildregion ermittelt und weiterverarbeitet.

Ferner sind im Stand der Technik Verkehrszeichenerkennungssysteme bekannt, die alle in einem Fahrschlauch eines Fahrzeugs vorhandenen Verkehrszeichen erfassen und klassifizieren. Solche Verkehrszeichenerkennungssysteme sind beispielsweise aus den Dokumenten EP 1 145 186 B1 und EP 1 383 098 B1 bekannt.

Aus dem Dokument Burschka, D. and Haager, G., Vision-Based 3D Scene Analysis for Driver Assistance, Proc. IEEE Conf. on Robotics and Automation, Page 812 bis 818, 2005, ist ein Verfahren zur Ermittlung der Position von Verkehrszeichen bekannt, bei dem mit Hilfe einer Monokamera eine Bildfolge von aufeinanderfolgenden Bildern aufgenommen wird. Mit Hilfe mehrerer Bilder dieser Bildfolge wird die Position des Verkehrszeichens ermittelt.

Aus dem Dokument US 2006/0139619 A1 ist eine Vorrichtung zur Ermittlung des Abstandes zwischen einem bewegten und einem ortsfesten Objekt bekannt. Hierzu werden mit einer Bilderfassungseinheit mehrere Bilder nacheinander aufgenommen und jeweils die Abbildungen des ortsfesten Objekts in den Bildern ermittelt. Anschließend wird über Winkelberechnungen die Position des ortsfesten Objekts bestimmt.

Aufgabe der Erfindung ist es, ein Verfahren und eine Vorrichtung zum Bestimmen der Position eines Verkehrszeichens anzugeben, durch die die Position des Verkehrszeichens auf relativ einfache Art und Weise korrekt bestimmt werden kann.

Diese Aufgabe wird durch ein Verfahren mit den Merkmalen des Patentanspruchs 1 und durch eine Vorrichtung mit den Merkmalen des Patentanspruchs 13 gelöst. Vorteilhafte Weiterbildungen der Erfindung sind in den abhängigen Patentansprüchen angegeben.

Durch das Verfahren zum Bestimmen der Position eines Verkehrszeichens mit den Merkmalen des Patentanspruchs 1 wird erreicht, dass die Position des Verkehrszeichens mit Hilfe einer angenommen Abmessung des Verkehrszeichens relativ genau bestimmt werden kann.

Bei einer vorteilhaften Weiterbildung wird ausgehend von den zur Positionsbestimmung der Position des Verkehrszeichens genutzten Bildern und/oder von den mit Hilfe der einzelnen Bilder ermittelten Positionen des Verkehrszeichens jeweils eine Positionsvarianz ermittelt, wobei aus der zu jedem Bild bzw. zu jeder ermittelten Position ermittelten Positionsvarianz eine Gesamtpositionsvarianz ermittelt wird. Mit Hilfe der ermittelten Gesamtpositionsvarianz wird überprüft, ob das Verkehrszeichen die angenommene Abmessung tatsächlich aufweist. Dabei ist es vorteilhaft, dass wenn ermittelt wird, dass das Verkehrszeichen die angenommene Abmessung aufweist, die ermittelte erste und/oder zweite Position des Verkehrszeichens als wahrscheinliche tatsächliche Position des Verkehrszeichens ermittelt oder eine Position mit Hilfe der ermittelten ersten und/oder zweiten Position als wahrscheinliche tatsächliche Position ermittelt wird. Alternativ oder zusätzlich kann die angenommene Abmessung des Verkehrszeichens als tatsächliche Abmessung des Verkehrszeichens ermittelt werden.

Wenn jedoch ermittelt wird, dass das Verkehrszeichen nicht die angenommene Abmessung aufweist, wird die wahrscheinliche tatsächliche Abmessung des Verkehrszeichens mit Hilfe der ermittelten Gesamtpositionsvarianz ermittelt. Vorzugsweise wird ausgehend von einem der erfassten Bilder und mit Hilfe der ermittelten tatsächlichen Abmessung des Verkehrszeichens eine Position des Verkehrszeichens bestimmt, die als wahrscheinliche tatsächliche Position ermittelt wird. Alternativ können mit Hilfe der ermittelten tatsächlichen Abmessung des Verkehrszeichens und mit Hilfe mehrerer Bilder jeweils eine Position des Verkehrszeichens ermittelt werden, mit deren Hilfe dann eine wahrscheinliche tatsächliche Position als Ergebnis der Positionsbestimmung ermittelt wird.

Von der Positionsvarianz ist insbesondere der Bereich von Positionen des Verkehrszeichens mit umfasst, die es haben würde, wenn es mindestens eine zweite oder eine zweite und mindestens eine dritte Abmessung haben würde. Die Abmessungen sind dabei übliche standardisierte Abmessungen des Verkehrszeichens. Ferner kann beim Ermitteln der Positionsvarianz die erzielbare Genauigkeit beim Ermitteln der Position des Verkehrszeichens, d. h. die Messgenauigkeit, berücksichtigt werden.

Bei einer Weiterbildung sind drei mögliche Abmessungen des Verkehrszeichens voreingestellt, wobei die mittlere Abmessung als üblicherweise angenommene Abmessung des Verkehrszeichens zur Positionsbestimmung genutzt wird. Alternativ kann die voreingestellte Abmessung abhängig von einem zuvor ermittelten Straßentyp voreingestellt werden. Dabei wird eine Abmessung von einer Vielzahl standardisierter Abmessungen des Verkehrszeichens abhängig vom ermittelten Straßentyp als aktuell angenommene Abmessung festgelegt, die vorzugsweise in einem Bildverarbeitungs- und -bewertungssystem zur Bestimmung der Position des Verkehrszeichens voreingestellt wird.

Der Straßentyp der Straße, auf der sich das Fahrzeug aktuell befindet kann insbesondere mit Hilfe eines Bildverarbeitungssystems zum Auswerten der mit Hilfe der Bilderfassungseinheit erfassten Bilder und/oder aufgrund der ermittelten Eigenbewegung bzw. Eigengeschwindigkeit des Fahrzeugs und/oder mit den von einem Navigationssystem zur aktuellen Position des Fahrzeugs ermittelten Informationen ermittelt werden.

Weiterhin kann ermittelt werden, ob die ermittelte Position und/oder die ermittelten Positionen plausibel sind. Insbesondere wird ermittelt, ob die ermittelte Position im Erfassungsbereich des Bilderfassungssystems liegt. Weiterhin kann die Eigenbewegung des Fahrzeuges für eine Plausibilitätsprüfung herangezogen werden, wobei insbesondere die Positionsänderung des Verkehrszeichens in der Bildfolge in einem entsprechenden Zusammenhang zu der bekannten Eigenbewegung bezüglich der Bildfolge stehen muss. Diese Plausibilitätsprüfung wird vorzugsweise in einem nachträglichen Verfahrensschritt durchgeführt, vorzugsweise dann. wenn das Verkehrszeichen den Sichtbereich des Bilderfassungssystems verlassen hat.

Die Positionsänderung zwischen dem Aufnahmezeitpunkt des ersten Bildes und des Aufnahmezeitpunk des zweiten Bildes kann mit Hilfe eines Navigationssystems des Fahrzeugs oder durch ein Geschwindigkeitsmesssystem vorzugsweise in Kombination mit einem Gierratenmesssystem oder einer errechneten Gierrate basierend auf anderen Fahrzeugsensoren, wie beispielsweise Raddrehzahlen und/oder Radgeschwindigkeiten und/oder Lenkradwinkelinformationen usw. des Fahrzeugs ermittelt werden.

Vorteilhaft ist, wenn im ersten Bild zumindest ein Objekt detektiert wird, wobei das Objekt mit Hilfe eines Verkehrszeichenerkennungsverfahrens klassifiziert wird, wobei erst nach einer Klassifizierung des Objekts als Verkehrszeichen weitere Schritte zum Bestimmen der Position des Objekts durchgeführt werden.

Ferner ist es vorteilhaft, wenn zumindest ausgehend von nacheinander erfassten Bildern jeweils die Position des Verkehrszeichens und jeweils eine Positionsabweichung ermittelt wird, wobei ausgehend von den ermittelten Positionsabweichungen eine Gesamtpositionsabweichung ermittelt wird, mit deren Hilfe überprüft wird, ob die angenommene Abmessung des Verkehrszeichens korrekt ist oder ob das Verkehrszeichen eine andere Abmessung hat.

Durch eine Vorrichtung zum Ermitteln der Position eines Verkehrszeichens mit den Merkmalen des Patentanspruchs 15 können gleiche Vorteile erzielt werden wie durch das Verfahren nach Patentanspruch 1. Ferner kann diese Vorrichtung auf die gleiche Weise weitergebildet werden wie für das Verfahren nach Patentanspruch 1 angegeben. Insbesondere kann auch die Vorrichtung mit den Merkmalen des Patentanspruchs 15 mit den zur Weiterbildung des Verfahrens nach Patentanspruch 1 in den abhängigen Patentansprüchen 1 angegebenen Merkmalen oder entsprechenden vorrichtungsgemäßen Merkmalen weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: ein Blockdiagramm eines Systems zur Bildaufnahme und Bildauswertung der Umgebung eines Kraftfahrzeugs; und
- Figur 2: eine schematische Darstellung der Positionsbestimmung eines Verkehrszeichens ausgehend von den mit Hilfe der Bildaufnahmeeinheit eines Kraftfahrzeugs bei dessen Bewegung erfassten Bildern.

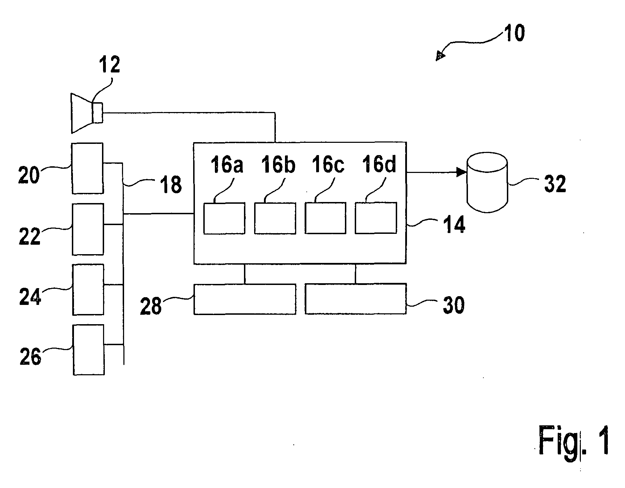

In Fig. 1 ist ein Blockdiagramm eines Bildaufnahme- und Auswertesystems 10 dargestellt, das in ein Kraftfahrzeug, insbesondere in einen PKW oder einen LKW, integriert ist. Das Bildaufnahme- und Auswertesystem 10 hat ein Kamerasystem 12, das eine Bildfolge mit Abbildungen zumindest eines Bereichs vor dem Fahrzeug erfasst und jeweils entsprechende Bilddaten erzeugt. Diese Bilddaten werden zu einer Bildverarbeitungseinheit 14 des Systems 10 übertragen und mit Hilfe von Steuerungs- und Verarbeitungsmodulen 16a bis 16d der Bildverarbeitungseinheit 14 analysiert und verarbeitet.

Die Bildverarbeitungseinheit 14 ist über einen Fahrzeugbus 18 des Fahrzeugs mit weiteren Steuer- und Verarbeitungseinheiten 20 bis 26, wie dem Navigationssystem, dem Geschwindigkeitserfassungs- und/oder Regelungssystem, des Fahrzeugs verbunden, wobei die Bildverarbeitungseinheit 14 über den Fahrzeugbus 18 Daten mit diesen weiteren Steuereinheiten 20 bis 26 austauschen kann. Die Bildverarbeitungseinheit 14 ist weiterhin über eine geeignete Datenleitung mit einer Anzeige- und Warneinheit 28 sowie mit einer Geschwindigkeitsregel- und/oder Begrenzungssteuerung 30 verbunden. Ferner ist die Bildverarbeitungseinheit 14 über eine Datenleitung mit einem Permanentspeicher 32 verbunden. Ein solcher Permanentspeicher 32 kann beispielsweise ein Festplattenspeicher, ein Flashspeicher oder eine weitere Steuereinheit sein. Ferner kann der Permanentspeicher 32 auch durch ein Datenbanksystem des Kraftfahrzeugs bereitgestellt werden. Das Kamerasystem 12 kann eine Monokamera, mehrere Monokameras, ein Stereokamerasystem und/oder mehrere Stereokamerasysteme umfassen, wobei die einzelnen Kameras Graustufenbilder oder Farbbilder erzeugen. Als Fahrzeugbus 18 können übliche bekannte Bussysteme, wie ein LIN-Bus, ein CAN-Bus und/oder ein Flexray-Bus eingesetzt werden. Die Optiken der Kamera bzw. der Kameras des Kamerasystems 12 können insbesondere verschiedene Festbrennweiten oder eine insbesondere über ein Revolver-Objektivsystem oder ein Varioobjektivsystem einstellbare Brennweite aufweisen.

Über den Fahrzeugbus 18 kommuniziert die Bildverarbeitungseinheit 14 auch mit weiteren Sensoren und Empfangseinheiten, die insbesondere eine ad hoc Kommunikation mit weiteren Fahrzeugen und/oder mit Verkehrseinrichtungen, wie Lichtsignalanlagen, Schilderbrücken und/oder einzelnen Verkehrsschildern, aufnehmen können. Ferner werden über den Fahrzeugbus 18 Informationen über Signalzustände einzelner Aktoren und Sensoren, insbesondere über die Aktivierung der Fahrtrichtungsanzeiger des Fahrzeugs, übertragen.

Mit Hilfe der durch das Kamerasystem 12 aufgenommenen Bildfolge werden durch eine Analyse der Bilddaten mit Hilfe der Bildverarbeitungseinheit 14 die Verkehrszeichen im Erfassungsbereich des Kamerasystems 12 ermittelt und klassifiziert. Durch das Klassifizieren der Verkehrszeichen mit Hilfe eines geeigneten Erkennungsverfahrens wird das abgebildete Verkehrszeichen als konkretes Verkehrszeichen identifiziert. Über die Anzeige- und Warneinheit 28 wird die Abbildung des Verkehrszeichens und/oder ein diesem Verkehrszeichen entsprechendes Symbol angezeigt. Zusätzlich oder alternativ kann auch eine Textinformation und/oder eine akustische Information ausgegeben werden. Ferner wird eine Verkehrsinformation insbesondere über eine Geschwindigkeitsbegrenzung oder eine Mindestgeschwindigkeit an die Geschwindigkeitsregel- und/oder Begrenzungssteuerung 30 übergeben, wobei die Geschwindigkeitsregel- und/oder Begrenzungssteuerung 30 ein Warnsignal bei Überschreitung der zulässigen Höchstgeschwindigkeit und/oder Unterschreitung einer Mindestgeschwindigkeit ausgeben kann. Alternativ können die Geschwindigkeitsbegrenzungen als maximale Begrenzungswerte einer Geschwindigkeitsregelung und/oder -begrenzung ggf. mit einem Offset zugrunde gelegt werden. Ein weiteres Verarbeitungs- und Steuerungsmodul 16a bis 16d der Bildverarbeitungseinheit 14 ermittelt aufgrund der Abbildungen der Bildfolge die aktuelle Fahrspur des Fahrzeugs. Ein weiteres Verarbeitungsmodul 16a bis 16d ordnet die einer der ermittelten Fahrspuren eindeutig zuordenbaren Verkehrszeichen nur dieser Fahrspur zu, wobei diese nur einer Fahrspur zugeordneten Verkehrszeichen zusammen mit der Fahrspurinformation im Permanentspeicher 32 gespeichert werden. Ferner können in dem Permanentspeicher 32 Vergleichsdaten für einen Mustervergleich zur Erkennung von Verkehrsschildern, insbesondere länderspezifische Muster von Verkehrszeichen, Symbole, die anstatt der Abbildungen der erkannten Verkehrszeichen auf der Anzeigeeinheit 28 ausgegeben werden können, sowie auszugebende Texte und/oder akustische Informationen gespeichert werden.

Die negativen Einflüsse der Eigenschaften des abbildenden optischen Systems der Kamera (Windschutzscheibe, Abbildungsoptik, Linse, Bildsensor) auf die Bildqualität müssen entsprechend reduziert oder ganz beseitigt werden, um eine Verbesserung von Bildern mit einer Abbildung eines Verkehrszeichens auch bei unterschiedlichen Umgebungsbedingungen sicher zu erreichen. Jedoch sind diese Einflussfaktoren oft nur mit einem relativ hohen Aufwand dahingehend zu verbessern, dass Bilder mit einer konstant hohen Qualität von der Umgebung des Fahrzeugs, insbesondere von der Abbildung eines zu klassifizierenden Verkehrszeichens, aufgenommen werden können. Andere Einflussfaktoren, wie die Eigenschaften des Verkehrszeichens, können nicht durch Maßnahmen am Fahrzeug selbst beeinflusst werden. In der Praxis können aber insbesondere relativ schlechte Bildaufnahmen des Verkehrszeichens in Folge von Regen, Nebel, Nebelschwaden sowie von Schneefall nicht vermieden werden. Auch die Einflüsse der Fahrzeugbewegung in Folge des Fahrbahnverlaufs können nicht vermieden jedoch bei der Verarbeitung der Bilder zumindest teilweise berücksichtigt werden.

Mit Hilfe der Verarbeitungsmodule 16a bis 16d der Bildverarbeitungseinheit 14 kann sowohl eine Objektverfolgung über mehrere nacheinander mit Hilfe des Kamerasystems 12 aufgenommenen Bilder einer Bildfolge durchgeführt werden, durch die ein Verkehrszeichen über die Bilder der Bildfolge verfolgt werden kann, als auch die Position des Verkehrszeichens bestimmt werden. Ferner kann mit Hilfe dieser Verarbeitungsmodule 16a bis 16d eine Klassifizierung von Objekten durchgeführt werden, wobei insbesondere die in den aufgenommenen Bildern ermittelten Objekte klassifiziert werden. Bei der Klassifizierung kann insbesondere zwischen relevanten Verkehrszeichen, deren Position zu bestimmen ist, und anderen nicht relevanten Objekten unterschieden werden. Vorzugsweise wird mit Hilfe der Verarbeitungsmodule 16a bis 16d nur dann eine Positionsbestimmung durchgeführt, wenn ermittelt worden ist, dass es sich bei dem Objekt um ein Verkehrszeichen handelt.

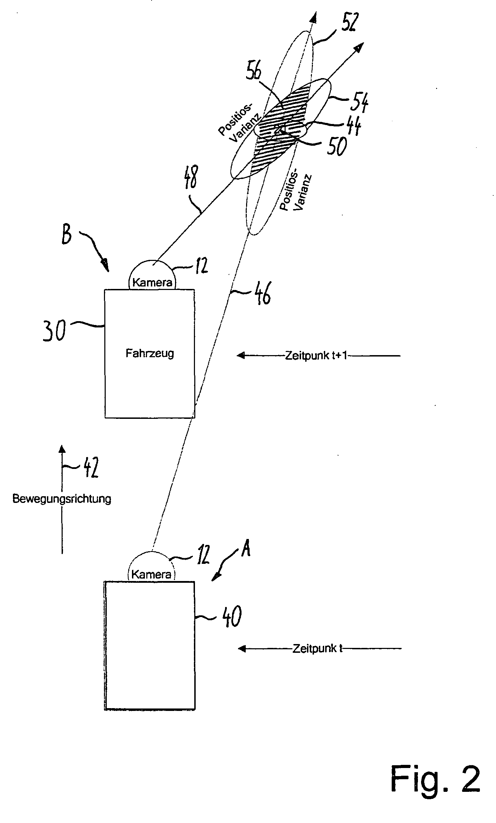

Bei der Klassifizierung kann insbesondere ermittelt werden, um welche Art Verkehrszeichen es sich handelt, insbesondere welche äußere Form das Verkehrszeichen aufweist. Dabei kann insbesondere unterschieden werden, ob es sich bei dem Verkehrszeichen um ein kreisrundes oder um ein eckiges Verkehrszeichen handelt. Ferner können standardisierte Abmessungen dieser klassifizierten äußeren Form ermittelt und zur nachfolgenden Bestimmung der Position des Verkehrszeichens verwendet werden, wie nachfolgend in Verbindung mit Figur 2 noch näher erläutert wird.

In Figur 2 ist eine schematische Darstellung der Bewegung eines Fahrzeugs 40 in eine Bewegungsrichtung 42 dargestellt, wobei sich das Fahrzeug 40 zum Zeitpunkt t an der Position A und zum Zeitpunkt t+1 an der Position B befindet. Das Fahrzeug 40 ist vorzugsweise ein Kraftfahrzeug, insbesondere ein PKW, ein LKW oder ein Motorrad. Dieses Fahrzeug 40 umfasst ein Bildaufnahme- und Auswertesystem 10 nach Figur 1 mit dem Kamerasystem 12. Mit Hilfe des Kamerasystems 12 wird zu jedem Aufnahmezeitpunkt jeweils ein Bild von einem definierten Bereich in Bewegungsrichtung 42 des Fahrzeugs 40 vor dem Fahrzeug 40 aufgenommen. Das Kamerasystem 12 des Fahrzeugs 40 nimmt an der Position A zum Zeitpunkt t und an der Position B zum Zeitpunkt t+1 jeweils ein Bild mit dem Verkehrszeichen 44 auf.

Bei der Bildaufnahme zum Zeitpunkt t verläuft ein erster Sichtstrahl 46 vom Kamerasystem 12 zum Verkehrszeichen 44 und bei der Bildaufnahme zum Zeitpunkt t+1 verläuft ein zweiter Sichtstrahl 48 vom Kamerasystem 12 zum Verkehrszeichen 44. Aufgrund einer voreingestellten Abmessung des Verkehrszeichens von beispielsweise 600 mm Durchmesser erfolgt mit Hilfe des zum Zeitpunkt t aufgenommenen Bildes eine erste Positionsbestimmung der Position 50 des Verkehrszeichens 44. Dabei wird sowohl die Position 50 selbst als auch eine Positionsvarianz ermittelt. Die Positionsvarianz gibt dabei einen Bereich von möglichen Positionen 50 des Verkehrszeichens 44 an, die aufgrund der Ungenauigkeiten bei der Positionsbestimmung mit Hilfe der beschriebenen Vorgehensweise und durch andere mögliche standardisierte Abmessungen des Verkehrszeichens 44 möglich sind. Das Verkehrszeichen 44 ist im vorliegenden Ausführungsbeispiel ein Geschwindigkeitsbegrenzungszeichen zum Begrenzen der zulässigen Höchstgeschwindigkeit auf 20 km/h. Solche rondenförmigen Verkehrszeichen 44 sind in einer Größe 1 mit einem Durchmesser von 420 mm, in einer Größe 2 mit einem Durchmesser von 600 mm und in einer Größe 3 mit einem Durchmesser von 750 mm standardisiert. Vorzugsweise wird die Größe 2 als angenommene Abmessung des Verkehrszeichens 44 gewählt, wenn nicht aufgrund weiterer Informationen eine andere Größe als angenommene Größe voreingestellt wird. Eine solche weitere Information kann beispielsweise eine Angabe zum Straßentyp der Straße sein, auf der sich das Fahrzeug 40 aktuell befindet.

Bei einer angenommenen Größe 2 von 600 mm wird mit Hilfe des zum Zeitpunkt t aufgenommenen Bildes eine erste Positionsbestimmung durchgeführt und die Position 50 ermittelt. Als Positionsvarianz wird der Bereich 52 ermittelt. Mit Hilfe des zum Zeitpunkts t+1 aufgenommen Bildes wird wiederholt die Position des Verkehrszeichens 44 unter Annahme der Größe 2 des Verkehrszeichens 44 ermittelt, wobei als Position des Verkehrszeichens 44 die Position 50 ermittelt wird.

Zusätzlich wird die für diese zweite Positionsbestimmung mögliche Positionsvarianz der ermittelten Position 50 ermittelt, wobei der Bereich 54 als Positionsvarianz ermittelt wird. Ausgehend von den ermittelten Positionsvarianzen (Bereiche 52 und 54) wird eine Gesamtpositionsvarianz ermittelt, die in Figur 2 durch den schraffierten Bereich 56 grafisch dargestellt ist. Anschließend wird überprüft, ob die ermittelte Position 50 innerhalb des Gesamtpositionsvarianzbereichs 56 liegt oder nicht. Liegt die ermittelte Position 50 außerhalb des Gesamtpositionsvarianzbereichs 56, wird in einem weiteren Schritt überprüft, ob die bei einer angenommenen Größe 1 oder angenommenen Größe 3 des Verkehrszeichens 44 für die aufgenommenen Bilder ermittelten Positionen korrekt sein könnten. Dazu wird jeweils zu der zu jedem Bild mit der angenommenen Größe 1 und zusätzlich mit der angenommenen Größe 3 ermittelten Position des Verkehrszeichens 44 eine Positionsvarianz pro angenommene Größe des Verkehrszeichens 44 ermittelt und ausgehend von den zu jeder Größe ermittelten Positionsvarianzen wird zu jeder angenommenen Größe eine Gesamtpositionsvarianz ermittelt, wobei jeweils überprüft wird, ob die für die betreffende Größe ermittelten Positionen des Verkehrszeichens 44 im jeweiligen Gesamtpositionsvarianzbereich liegen. Dadurch kann ermittelt werden, welche Größe das Verkehrszeichen 44 tatsächlich hat. Ferner kann für diese tatsächliche Größe des Verkehrszeichens 44 ermittelte Position als tatsächliche Position des Verkehrszeichens 44 ermittelt und ausgegeben sowie gegebenenfalls weiterverarbeitet werden.

Mit Hilfe der beschriebenen Vorgehensweise ist auf einfache Art und Weise eine dreidimensionale Positionsbestimmung der Position 50 des Verkehrszeichens 44 vorzugsweise im Weltkoordinatensystem möglich. Ein korrektes Positionsergebnis wird insbesondere auch dann erreicht, wenn die aufgenommenen Bilder mit Hilfe einer monokularen Kamera oder einer Einzelkamera eines Stereokamerasystems aufgenommen worden sind und/oder wenn in Folge der konkreten Bildaufnahmebedingungen nur relativ schlechtes Bildmaterial mit Abbildungen des Verkehrszeichens 44 vorliegt. Insbesondere muss zur Bestimmung der Position 50 des Verkehrszeichens 44 der Fußpunkt der Haltestange des Verkehrszeichens 44 nicht zwingend sichtbar sein und muss nicht aufwendig aus den vorhandenen Bilddaten ermittelt werden, um die Position des Verkehrszeichens 44 korrekt bestimmen zu können.

Zur Positionsbestimmung wird vorzugsweise eine Überlagerung der bei mehreren nacheinander durchgeführten Positionsbestimmungen ermittelten Positionsvarianzen 52, 54 durchgeführt, um den gemeinsamen Bereich 56 der ermittelten Positionsvarianzen 52, 54 als Gesamtpositionsvarianz zu ermitteln. Aufgrund der Kenntnis der genauen Fahrzeugbewegung bzw. der genauen Bewegung des Kamerasystems 12 zwischen den Aufnahmezeitpunkten t, t+1 bzw. t+n der zur Positionsbestimmung des Verkehrszeichens 44 verwendeten Bildern kann eine hohe Genauigkeit der Positionsbestimmung erreicht werden. Mit Hilfe der Gesamtpositionsvarianz kann die im Schnittpunkt der Sichtstrahlen 46, 48 ermittelte Position 50 auf einfache Art und Weise überprüft werden. Vorzugsweise wird mit Hilfe des Kamerasystems 12 die Bildfolge mit Abbildungen des Verkehrszeichens 44 aufgenommen und ausgehend von mehreren Einzelbildern der Bildfolge jeweils eine Position des Verkehrszeichens 44 aufgrund einer angenommenen Abmessung bzw. einer angenommenen Größe des Verkehrszeichens 44 bestimmt. Je mehr Einzelbilder zur Positionsbestimmung herangezogen werden, d. h. je mehr Positionsbestimmungen durchgeführt werden, umso genauer stimmt die ermittelte Position mit der tatsächlichen Position des Verkehrszeichens 44 überein. Dadurch kann die Genauigkeit der Positionsbestimmung der Position 50 des Verkehrszeichens 44 auf einfache Art und Weise erhöht werden.

Durch die exakte und korrekte Bestimmung der Position 50 des Verkehrszeichens 44 kann dieses insbesondere sicher einer Fahrspur einer Fahrbahn zugeordnet werden, wenn unterschiedliche Verbots-, Gebots- und/oder Aufhebungszeichen für unterschiedliche Fahrspuren vorgesehen sind. Vorteilhaft ist, eine simultane Verfolgung und eine dreidimensionale Positionsbestimmung der Position 50 des Verkehrszeichens 44 für verschiedene mögliche Abmessungen des Verkehrszeichens 44 durchzuführen und die wahrscheinlichste und plausible Position 50 als wahrscheinliche tatsächliche Position des Verkehrszeichens 44 festzulegen und auszugeben bzw. weiter zu verarbeiten..

Durch diese Vorgehensweise können insbesondere Darstellungen von Verkehrszeichen, für die keine standardisierte Größe ermittelt werden konnte, als irrelevante Verkehrszeichen eingestuft werden. Dies betrifft insbesondere Darstellungen von Verkehrszeichen als relativ kleine Verkehrszeichen an der Rückseite von LKW's, insbesondere zur Angabe ihrer Höchstgeschwindigkeit. Die Plausibilität der ermittelten Position 50 wird insbesondere dadurch überprüft, ob die ermittelte Position 50 sich überhaupt im Aufnahmebereich des Kamerasystems 12 befindet oder ob es sich bei der ermittelten Position um eine virtuelle Position außerhalb des Bildaufnahmebereichs des Kamerasystems 12 handelt. In Ergänzung oder alternativ kann für eine Überprüfung der ermittelten Position 50 eine nachträgliche Plausibilitätsprüfung der ermittelten Positionsänderung in der Bildfolge unter Berücksichtigung der Eigenbewegung des Fahrzeugs durchgeführt werden.

Mit Hilfe der beschriebenen Positionsbestimmung der Position 50 des Verkehrszeichens 44 kann ein höherer Plausibilitätsgrad für die ermittelte Position des Verkehrszeichens 44 sowie eine verbesserte Verkehrszeichenerkennung erreicht werden. Um das Verkehrszeichen 44 abhängig von der ermittelten Position einer Fahrspur zuordnen zu können, ist in einem zusätzlichen Verfahren der Verlauf mindestens einer Fahrspur zu ermitteln und mit Hilfe von weiteren Bewertungskriterien zu überprüfen, ob das Verkehrzeichen 44 nur einer Fahrspur oder mehreren Fahrspuren zuzuordnen ist.

## Patentansprüche

1. Verfahren zum Bestimmen der Position eines Verkehrszeichens,
bei dem mit Hilfe einer Bilderfassungseinheit (12) eines Kraftfahrzeugs mindestens zwei Bilder mit jeweils zumindest der Abbildung mindestens eines Verkehrszeichens (44) nacheinander als Bildfolge erfasst werden, wobei die Position (A, B) der Bilderfassungseinheit (12) durch eine Bewegung des Kraftfahrzeugs zwischen den Aufnahmezeitpunkten (t, t+1) des ersten Bildes und des zweiten Bildes geändert wird,
ausgehend vom ersten Bild eine erste Position des Verkehrszeichens (44) ermittelt wird, und
bei dem ausgehend vom zweiten Bild eine zweite Position des Verkehrszeichens (44) ermittelt wird,
**dadurch gekennzeichnet, dass** eine angenommene Abmessung des Verkehrszeichens (44) voreingestellt wird,
die erste Position und die zweite Position jeweils mit Hilfe der voreingestellten angenommenen Abmessung ermittelt werden, und
dass ausgehend von der ermittelten ersten Position und von der ermittelten zweiten Position eine Position des Verkehrszeichens (44) ermittelt und als ermittelte Position (50) des Verkehrszeichens (44) ausgegeben wird.

2. Verfahren nach Anspruch 1, **dadurch gekennzeichnet, dass** ausgehend vom ersten Bild und/oder der ermittelten ersten Position eine erste Positionsvarianz (52) ermittelt wird, dass ausgehend vom zweiten Bild und/oder der ermittelten zweiten Position eine zweite Positionsvarianz (54) ermittelt wird, dass ausgehend von der ermittelten ersten Positionsvarianz (52) und der ermittelten zweiten Positionsvarianz (54) eine Gesamtpositionsvarianz (56) ermittelt wird, und dass mit Hilfe der ermittelten Gesamtpositionsvarianz (56) überprüft wird, ob das Verkehrszeichen (44) die angenommene Abmessung aufweist.

3. Verfahren nach Anspruch 2, **dadurch gekennzeichnet, dass** wenn ermittelt wird, dass das Verkehrszeichen (44) die angenommene Abmessung aufweist, die ermittelte erste und/oder zweite Position des Verkehrszeichens als tatsächliche Position (50) des Verkehrszeichens (44) ermittelt wird und/oder die angenommene Abmessung als tatsächliche Abmessung des Verkehrszeichens (44) ermittelt wird,
und dass wenn ermittelt wird, dass das Verkehrszeichen (44) nicht die angenommene Abmessung aufweist, die tatsächliche Abmessung des Verkehrszeichens (44) mit Hilfe der ermittelten Gesamtpositionsvarianz (56) ermittelt wird, wobei vorzugsweise ausgehend vom ersten Bild und/oder ausgehend vom zweiten Bild mit Hilfe der ermittelten tatsächlichen Abmessung eine Position des Verkehrszeichen als tatsächliche Position (50) ermittelt wird.

4. Verfahren nach einem der Ansprüche 2 oder 3, **dadurch gekennzeichnet, dass** die Positionsvarianz (52, 54, 56) den Bereich von Positionen des Verkehrszeichens umfasst, die es haben würde, wenn es eine zweite und mindestens eine dritte angenommene Abmessung haben würde.

5. Verfahren nach Anspruch 4, **dadurch gekennzeichnet, dass** die erste Abmessung kleiner und die zweite Abmessung größer als die voreingestellte Abmessung sind, und/oder dass die voreingestellte Abmessung abhängig von einem ermittelten Straßentyp voreingestellt wird, wobei eine von einer Vielzahl standardisierter Abmessungen des Verkehrszeichens (44) abhängig vom ermittelten Straßentyp als aktuell angenommene Abmessung festgelegt wird.

6. Verfahren nach Anspruche 5, **dadurch gekennzeichnet, dass** der Straßentyp der Straße, auf der sich das Fahrzeug aktuell befindet mit Hilfe eines Bildverarbeitungssystems (14) zum Auswerten der mit Hilfe der Bilderfassungseinheit (12) erfassten Bilder und/oder unter Berücksichtigung der Eigenbewegung bzw. Eigengeschwindigkeit und/oder mit den von einem Navigationssystem ermittelten Informationen ermittelt wird.

7. Verfahren nach einem der vorhergehenden Ansprüche, **dadurch gekennzeichnet, dass** die Positionsänderung der Bildaufnahmeeinheit (12) zwischen dem Aufnahmezeitpunkt (t) des ersten Bildes und dem Aufnahmezeitpunkt (t+1) des zweiten Bildes mit Hilfe eines Navigationssystems des Fahrzeugs oder durch ein Geschwindigkeitsmesssystem des Fahrzeugs, vorzugsweise in Verbindung mit einem Gierratenmesssystem des Fahrzeugs, ermittelt wird.

8. Verfahren nach einem der vorhergehenden Ansprüche, **dadurch gekennzeichnet, dass** im ersten Bild zumindest ein Objekt detektiert wird, wobei das Objekt mit Hilfe eines Verkehrszeichenerkennungsverfahrens klassifiziert wird, und dass erst nach einer Klassifizierung des Objekts als Verkehrszeichen die weiteren Schritte zum Bestimmen der Position (50) des Verkehrszeichens (44) nach einem der vorhergehenden Ansprüche durchgeführt werden.

9. Verfahren nach einem der vorhergehenden Ansprüche, **dadurch gekennzeichnet, dass** mit Hilfe der Bilderfassungseinheit (12) mindestens drei Bilder mit Abbildungen mindestens eines Verkehrszeichens (44) nacheinander als Bildfolge erfasst werden, dass ausgehend von jedem der Bilder jeweils einer Bestimmung der Position des Verkehrszeichens (44) durchgeführt wird, dass zu jeder ermittelten Position eine Positionsabweichung (52, 54) ermittelt wird, und dass mit Hilfe der ermittelten Positionsabweichungen (52, 54) die Gesamtpositionsabweichung (56) ermittelt wird, wobei beim Ermitteln der Gesamtpositionsabweichung (56) vorzugsweise nur Positionsabweichungen (52, 54) berücksichtigt werden, wenn für die jeweilige ermittelte Position (50) des Verkehrszeichens (44), zu der die Positionsabweichung (52, 54) ermittelt worden ist, dass diese Position (50) plausibel ist.

10. Verfahren nach einem der vorhergehenden Ansprüche, **dadurch gekennzeichnet, dass** überprüft wird, ob die ermittelte erste Position und die ermittelte zweite Position des Verkehrszeichens (44) plausibel sind und unter Berücksichtigung eines möglichen Messfehlers bei der Bestimmung der Positionen (50) übereinstimmen.

11. Verfahren nach einem der vorhergehenden Ansprüche, **dadurch gekennzeichnet, dass** die Bewegung der Bilderfassungseinheit (12) im Raum, vorzugsweise in einer Ebene, ermittelt wird.

12. Verfahren nach einem der vorhergehenden Ansprüche, **dadurch gekennzeichnet, dass** die Bilderfassungseinheit (12) eine Monokamera oder eine einzelne Kamera eines Stereokamerasystems umfasst, wobei vorzugsweise monochrome Bilder erfasst und/oder verarbeitet werden.

13. Vorrichtung zum Ermitteln der Position eines Verkehrszeichens,
mit einer Bilderfassungseinheit (12) eines Fahrzeugs zum Erfassen von mindestens zwei Bildern mit Abbildungen mindestens eines Verkehrszeichens (44) nacheinander als Bildfolge, wobei die Bilderfassungseinheit zu jedem Bild der Abbildung entsprechende Bilddaten erzeugt,
mit einem Kraftfahrzeug, das die Position der Bilderfassungseinheit (12) zwischen den Aufnahmezeitpunkten (t, t+1) der Bilder der Bildfolge ändert,
mit einer Datenverarbeitungseinheit (14) zur Bildverarbeitung der Bilddaten der erfassten Bilder,
**dadurch gekennzeichnet, dass** die Datenverarbeitungseinheit (14) ausgehend vom ersten Bild mit Hilfe einer voreingestellten angenommenen Abmessung des Verkehrszeichens (44) eine erste Position des Verkehrszeichens (44) ermittelt,
die Datenverarbeitungseinheit (14) ausgehend vom zweiten Bild mit Hilfe derselben voreingestellten angenommenen Abmessung des Verkehrszeichens (44) eine zweite Position ermittelt,
und dass die Datenverarbeitungseinheit (14) ausgehend von der ermittelten ersten Position und von der ermittelten zweiten Position eine Position (50) des Verkehrszeichens (44) ermittelt und als ermittelte Position (40) des Verkehrszeichens (44) ausgibt.

14. Vorrichtung nach Anspruch 13, **dadurch gekennzeichnet, dass** die Bilderfassungseinheit (12) fest mit dem Fahrzeug verbunden ist, wobei die Bewegung der Bilderfassungseinheit (12) die aufgrund der Fahrzeugdaten bekannte Bewegung des Fahrzeugs ist.

15. Vorrichtung nach Anspruch 14, **dadurch gekennzeichnet, dass** der Datenverarbeitungseinheit (14) die Informationen über die Bewegung des Fahrzeugs bekannt sind oder von einer weiteren Datenverarbeitungs- und/oder Steuereinheit des Fahrzeugs, vorzugsweise über ein Bussystem des Fahrzeugs, übertragbar sind und/oder dass die Datenverarbeitungseinheit (14) die Bewegung des Fahrzeugs aus den von einem Navigationssystem des Fahrzeugs bereitgestellten Informationen bestimmt.

## Claims

1. A method for determining the position of a traffic sign,
in which by means of an image capturing unit (12) of a motor vehicle at least two images, each of which comprising at least the representation of at least one traffic sign (44), are captured successively as an image sequence, wherein the position (A, B) of the image capturing unit (12) is changed by a movement of the motor vehicle between the capturing points in time (t, t+1) of the first image and of the second image,
based on the first image, a first position of the traffic sign (44) is determined, and
in which, based on the second image, a second position of the traffic sign (44) is determined,
**characterized in that** an assumed dimension of the traffic sign (44) is preset,
the first position and the second position are respectively determined with the aid of the preset assumed dimension, and
**in that**, based on the determined first position and on the determined second position, a position of the traffic sign (44) is determined and output as a determined position (50) of the traffic sign (44).

2. The method according to claim 1, **characterized in that** based on the first image and/or the determined first position, a first position variance (52) is determined, **in that** based on the second image and/or the determined second position a second position variance (54) is determined, **in that** based on the determined first position variance (52) and the determined second position variance (54) a total position variance (56) is determined, and **in that** with the aid of the determined total position variance (56) it is checked whether the traffic sign (44) has the assumed dimension.

3. The method according to claim 2, **characterized in that**, when it is determined that the traffic sign (44) has the assumed dimension, the determined first and/or second position of the traffic sign is determined as an actual position (50) of the traffic sign (44) and/or the assumed dimension is determined as an actual dimension of the traffic sign (44),
and **in that**, when it is determined that the traffic sign (44) does not have the assumed dimension, the actual dimension of the traffic sign (44) is determined with the aid of the determined total position variance (56), wherein preferably based on the first image and/or based on the second image a position of the traffic sign is determined as an actual position (50) with the aid of the determined actual dimension.

4. The method according to one of the claims 2 or 3, **characterized in that** the position variance (52, 54, 56) comprises the range of positions of the traffic sign which it would have if it were to have a second and at least a third assumed dimension.

5. The method according to claim 4, **characterized in that** the first dimension is smaller and the second dimension is greater than the preset dimension and/or **in that** the preset dimension is preset dependent on a determined road type, wherein one of a plurality of standardized dimensions of the traffic sign (44) is defined as a currently assumed dimension dependent on the determined road type.

6. The method according to claim 5, **characterized in that** the road type of the road on which the vehicle is currently located is determined by means of an image processing system (14) for evaluating the images captured by means of the image capturing unit (12) and/or while taking into account the own movement or own speed and/or with the information determined by a navigation system.

7. The method according to one of the preceding claims, **characterized in that** the change in position of the image capturing unit (12) between the capturing point in time (t) of the first image and the capturing point in time (t+1) of the second image is determined by means of a navigation system of the vehicle or by a speed measuring system of the vehicle, preferably in connection with a yawing rate measuring system of the vehicle.

8. The method according to one of the preceding claims, **characterized in that** in the first image at least one object is detected, wherein the object is classified by means of a traffic sign recognition method, and **in that** only after a classification of the object as a traffic sign the further steps for determining the position (50) of the traffic sign (44) according to one of the preceding claims are carried out.

9. The method according to one of the preceding claims, **characterized in that** by means of the image capturing unit (12) at least three images with representations of at least one traffic sign (44) are captured successively as an image sequence, **in that** based on each of the images a respective determination of the position of the traffic sign (44) is carried out, **in that** for each determined position a position deviation (52, 54) is determined, and **in that** with the aid of the determined position deviations (52, 54) the total position deviation (56) is determined, wherein in the determination of the total position deviation (56) preferably position deviations (52, 54) are only taken into account when, for the respective determined position (50) of the traffic sign (44) for which the position deviation (52, 54) has been determined, this position (50) is plausible.

10. The method according to one of the preceding claims, **characterized in that** it is checked whether the determined first position and the determined second position of the traffic sign (44) are plausible and coincide while taking into account a possible measuring error in the determination of the positions (50).

11. The method according to one of the preceding claims, **characterized in that** the movement of the image capturing unit (12) is determined in space, preferably in a plane.

12. The method according to one of the preceding claims, **characterized in that** the image capturing unit (12) comprises a mono camera or a single camera of a stereo camera system, preferably monochrome images being captured and/or processed.

13. A device for determining the position of a traffic sign, comprising
an image capturing unit (12) of a vehicle for capturing at least two images with representations of at least one traffic sign (44) successively as an image sequence, wherein the image capturing unit generates image data corresponding to the representation for each image,
a motor vehicle that changes the position of the image capturing unit (12) between the capturing points in time (t, t+1) of the images of the image sequence,
a data processing unit (14) for image processing of the image data of the captured images,
**characterized in that** the data processing unit ( 14), based on the first image, determines a first position of the traffic sign (44) with the aid of a preset assumed dimension of the traffic sign (44),
the data processing unit (14), based on the second image, determines a second position with the aid of the same preset assumed dimension of the traffic sign (44),
and **in that** the data processing unit (14), based on the determined first position and on the determined second position, determines a position (50) of the traffic sign (44) and outputs this position as a determined position (40) of the traffic sign (44).

14. The device according to claim 13, **characterized in that** the image capturing unit (12) is firmly connected to the vehicle, wherein the movement of the image capturing unit (12) is the movement of the vehicle known on the basis of the vehicle data.

15. The device according to claim 14, **characterized in that** the information on the movement of the vehicle is known to the data processing unit (14) or is transmittable from a further data processing and/or control unit of the vehicle, preferably via a bus system of the vehicle, and/or **in that** the data processing unit (14) determines the movement of the vehicle from the information provided by a navigation system of the vehicle.

## Revendications

1. Procédé de détermination de la position d'un panneau de signalisation routière,
dans lequel au moins deux images comportant chacune au moins la représentation d'au moins un panneau de signalisation routière (44) sont capturées successivement sous la forme d'une séquence à l'aide d'une unité de capture d'images (12) d'un véhicule automobile, la position (A, B) de l'unité de capture d'images (12) étant modifiée par un déplacement du véhicule automobile entre les instants de capture (t, t+1) de la première image et de la deuxième image,
une première position du panneau de signalisation routière (44) est déterminée à partir de la première image,
dans lequel une deuxième position du panneau de signalisation routière (44) est déterminée à partir de la deuxième image,
**caractérisé en ce qu'**une dimension adoptée du panneau de signalisation routière (44) est préréglée,
la première position et la deuxième position sont chacune déterminée à l'aide de la dimension adoptée préréglée, et
**en ce qu'**une position du panneau de signalisation routière (44) est déterminée à partir de la première position déterminée et de la deuxième position déterminée et est délivrée en tant que position déterminée (50) du panneau de signalisation routière (44).

2. Procédé selon la revendication 1, **caractérisé en ce qu'**une première variance de position (52) est déterminée à partir de la première image et/ou de la première position déterminée, **en ce qu'**une deuxième variance de position (54) est déterminée à partir de la deuxième image et/ou de la deuxième position déterminée, **en ce qu'**une variance de position totale (56) est déterminée à partir de la première variance de position déterminée (52) et de la deuxième variance de position déterminée (54), et **en ce que** l'on vérifie à l'aide de la variance de position totale déterminée (56) si le panneau de signalisation routière (44) a la dimension adoptée.

3. Procédé selon la revendication 2, **caractérisé en ce que**, si l'on détermine que le panneau de signalisation routière (44) a la dimension adoptée, la première position déterminée et/ou la deuxième position déterminée du panneau de signalisation routière est déterminée comme étant une position réelle (50) du panneau de signalisation routière (44) et/ou la dimension adoptée est déterminée comme étant la dimension réelle du panneau de signalisation routière (44),
et **en ce que**, si l'on détermine que le panneau de signalisation routière (44) n'a pas la dimension adoptée, la dimension réelle du panneau de signalisation routière (44) est déterminée à l'aide de la variance de position totale déterminée (56), une position du panneau de signalisation routière étant déterminée en tant que position réelle (50) avantageusement à partir de la première image et/ou à partir de la deuxième image à l'aide de la dimension réelle déterminée.

4. Procédé selon l'une des revendications 2 ou 3, **caractérisé en ce que** la variance de position (52, 54, 56) comporte le domaine de positions du panneau de signalisation routière qu'il aurait s'il avait une deuxième dimension adoptée et au moins une troisième dimension adoptée.

5. Procédé selon la revendication 4, **caractérisé en ce que** la première dimension est inférieure, et la deuxième dimension est supérieure, à la dimension préréglée, et/ou **en ce que** la dimension préréglée est préréglée en fonction d'un type de route déterminé, une parmi un grand nombre de dimensions normalisées du panneau de signalisation (44) étant fixée comme dimension actuellement adoptée en fonction du type de route déterminé.

6. Procédé selon la revendication 5, **caractérisé en ce que** le type de route de la route sur laquelle le véhicule se trouve actuellement est déterminé à l'aide d'un système de traitement d'images (14) pour évaluer les images capturées à l'aide de l'unité de capture d'images (12) et/ou en tenant compte du mouvement propre ou de la vitesse propre et/ou avec des informations déterminées par un système de navigation.

7. Procédé selon l'une des revendications précédentes, **caractérisé en ce que** la variation de position de l'unité de capture d'images (12) entre l'instant de capture (t) de la première image et l'instant de capture (t+1) de la deuxième image est déterminée à l'aide d'un système de navigation du véhicule ou par un système de mesure de vitesse du véhicule, avantageusement en liaison avec un système de mesure de lacet du véhicule.

8. Procédé selon l'une des revendications précédentes, **caractérisé en ce que** au moins un objet est détecté dans la première image, l'objet étant classé à l'aide d'un procédé de reconnaissance de panneaux de signalisation routière, et **en ce que** c'est seulement après avoir classé l'objet comme panneau de signalisation routière que les autres étapes sont mises en oeuvre pour déterminer la position (50) du panneau de signalisation routière (44) selon l'une des revendications précédentes.

9. Procédé selon l'une des revendications précédentes, **caractérisé en ce qu'** au moins trois images comportant des représentations d'au moins un panneau de signalisation routière (44) sont capturées successivement sous la forme d'une séquence à l'aide de l'unité de capture d'images (12), **en ce qu'**une détermination de la position du panneau de signalisation routière (44) est à chaque fois effectuée à partir de chacune des images, **en ce qu'**un écart de position (52, 54) est déterminé pour chaque position déterminée à partir de chacune des images, et **en ce que** l'écart de position total (56) est déterminé pour chaque position déterminée à l'aide des écarts de position déterminés (52, 54), seuls des écarts de position (52, 54) étant avantageusement pris en compte lors de la détermination de l'écart de position total (56) lorsque cette position (50) est plausible pour la position déterminée respective (50) du panneau de signalisation routière (44) pour laquelle l'écart de position (52, 54) a été déterminé.

10. Procédé selon l'une des revendications précédentes, **caractérisé en ce que** l'on vérifie si la première position déterminée et la deuxième position déterminée du panneau de signalisation routière (44) sont plausibles et coïncident en prenant en compte d'une erreur de mesure éventuelle lors de la détermination des positions (50).

11. Procédé selon l'une des revendications précédentes, **caractérisé en ce que** le mouvement de l'unité de capture d'images (12) est déterminé dans l'espace, avantageusement dans un plan.

12. Procédé selon l'une des revendications précédentes, **caractérisé en ce que** l'unité de capture d'images (12) possède une caméra monochrome ou une caméra individuelle d'un système de caméras stéréo, des images monochromes étant avantageusement détectées et/ou traitées.

13. Dispositif de détermination de la position d'un panneau de signalisation routière, comportant
une unité de capture d'images (12) d'un véhicule destinée à capturer successivement sous la forme d'une séquence au moins deux images comportant des représentations d'au moins un panneau de signalisation routière (44), l'unité de capture d'images générant pour chaque image des données d'images correspondant à la représentation,
un véhicule automobile qui modifie la position de l'unité de capture d'images (12) entre les instants de capture (t, t+1) des images de la séquence,
une unité de traitement de données (14) pour le traitement d'images des données d'images des images détectées, **caractérisé en ce que** l'unité de traitement d'images (14) détermine une première position du panneau de signalisation routière (44) à partir de la première image à l'aide d'une dimension adoptée préréglée du panneau de signalisation routière (44),
l'unité de traitement de données (14) détermine une deuxième position à partir de la deuxième image à l'aide de la même dimension adoptée préréglée du panneau de signalisation routière (44),
et **en ce que** l'unité de traitement de données (14) détermine une position (50) du panneau de signalisation routière (44) à partir de la première position déterminée et de la deuxième position déterminée et la délivre en tant que position déterminée (40) du panneau de signalisation routière (44).

14. Dispositif selon la revendication 13, **caractérisé en ce que** l'unité de capture d'images (12) est reliée de façon fixe au véhicule, le mouvement de l'unité de capture d'images (12) étant le mouvement du véhicule connu en se fondant sur les données du véhicule.

15. Dispositif selon la revendication 14, **caractérisé en ce que** les informations sur le mouvement du véhicule sont connues de l'unité de traitement de données (14) et peuvent être transmises par une autre unité de traitement de données et/ou de commande du véhicule, avantageusement par un système de bus du véhicule, et/ou **en ce que** l'unité de traitement de données (14) détermine le mouvement dudit véhicule à partir des informations délivrées par un système de navigation du véhicule.
